# EUROPEAN PATENT SPECIFICATION

(11) **EP 3 307 939 B1**
(45) Date of publication and mention of the grant of the patent: **27.02.2019**
(21) Application number: 16744798.6
(22) Date of filing: 14.06.2016
(51) Int. Cl.: D21B 1/32, D21D 5/06

(54) **METHOD AND ARRANGEMENT FOR DEFIBERIZING FIBROUS MATERIAL AND USE OF A DEFIBERIZING DRUM**
VERFAHREN UND ANORDNUNG ZUR ENTFASERUNG VON FASERMATERIAL UND VERWENDUNG EINER ENTFASERUNGSTROMMEL
PROCÉDÉ ET AGENCEMENT DE DÉFIBRAGE DE MATÉRIAU FIBREUX ET UTILISATION D'UN TAMBOUR DE DÉFIBRAGE

(30) Priority: 15.06.2015 FI 20155457
(43) Date of publication of application: 18.04.2018
(73) Proprietor: Andritz Oy, 00180 Helsinki (FI)
(72) Inventor: VANHALA, Kimmo, 48600 Kotka (FI)
(74) Representative: Hoffmann Eitle
(86) International application number: PCT/FI2016/050425
(87) International publication number: WO 2016/203107

(56) References cited:
- EP-A1- 0 062 988
- EP-A1- 2 873 769
- EP-A2- 0 732 442
- WO-A1-03/080923
- DE-A1- 3 332 389
- DE-B3-102013 217 562

## Description

The present invention relates to a batch-type defiberizing drum arrangement, which defiberizing drum (drum pulper) is used for defiberizing fibrous material, especially recycled fiber material, such as recovered paper or paper board grades. As an example we can mention various packing and wrapper grades, corrugated cardboards, and plastics-coated cardboards, and other laminated paper grades that are rich in contaminants.

It is known that defiberizing of fibrous material can be carried out in a pulper comprising a cylindrical container and a fast rotating rotor arranged on the bottom of the container, which rotor often is spiral-like. Water with possible admixed treatment chemicals is added into the material to be defiberized, and the rotor focuses intensive cutting forces to the material being treated. Pulpers are operated in various consistency ranges, whereby high consistency and medium consistency pulpers are usually operated in batch-mode. Then the process has different stages for feed of fibrous material and water, for defiberizing (slushing), for dilution and discharging treated material. This kind of pulpers are well suitable for disintegrating paper or cardboard material that is difficult to disintegrate, but they also typically break fibers and consume notable amounts of energy. Rotors are exposed to intense wearing.

Fibrous material, such as recovered paper, can also be defiberized in a rotating drum. A defiberizing drum most usually comprises a horizontal cylinder having a length of several meters and a diameter in a range of approximately two to five meters and having a housing formed of two parts. The first portion of the housing is often non-perforated and the other portion is perforated. In some solutions, the drum is usually arranged in a slightly inclined position so that the feed end of the first portion of the housing is located higher than the outer end of the second portion. The interior of the drum is, corresponding to the housing, divided into two parts by means of a partition wall that separates the non-perforated portion and the perforated portion inside the drum.

The interior of the drum is typically provided with longitudinal internal lifting planes or lifting blades, which during rotation of the drum continuously lift material being treated from the lowest portion of the drum to a higher located portion, from where it is casted against the housing of the drum and exposed to refining and cutting forces that disintegrate fiber bonds. Apparatuses of this type can be used e.g. for defiberizing and screening fibrous material, e.g. recovered paper or board, whereby moistening of the material being treated, possible chemical treatment and defiberizing take place in the first, non-perforated portion of the drum, and screening takes place in the second, perforated portion. Defiberizing and screening can also be arranged in separate drums. Dimensioning of the drum and its speed of rotation are designed according to the capacity meant for a defiberizing apparatus so that the material led to the feed end of the drum is defiberized as well as possible after the treatment. The length of the drum varies according to the planned production volume, at present it can be e.g. 20-50 meters and the diameter 2-5 meters. The circumferential speed of the drum can typically be e.g. 100-160 meters per minute, so that the rotational speed is 10-15 rotations per minute. Defiberizing drums are typically operated continuously, whereby the amounts of material being treated are typically approximately 100-3000 tons per day. An advantage of defiberizing drums is lower energy consumption and smaller fiber losses compared to the above mentioned pulper having a rotor.

An increasing attempt is to recycle and reuse waste material comprising paper and board. However, transportation of this kind of material to large treatment plants is not often profitable, and therefore there is a need for smaller, batch-type treatment plants.

DE 10 2013 217 562 B3 discloses an arrangement according to the preamble of claim 10.

A purpose of the present invention is to provide a treatment arrangement and process for fibrous material, such as recovered paper and recovered boards, that is suitable for smaller amounts of material cost-efficiently and with low energy requirement.

The present invention is based on a totally novel solution, in which a defiberizing drum is operated in batch mode instead of continuous operation, and therefore it can be used for cost-efficient treatment of fibrous material amounts smaller that conventional, such as e.g. recovered paper or recovered board, such as liquid packaging board, e.g. 10-250 tons per day.

The characterizing features of the invention are disclosed in the independent claims.

The present invention relates to a method for defiberizing fibrous material as recited in claim 1.

According to a preferred embodiment the direction of rotation and/or the inclination angle of the drum is changed at least at one of the following points: between steps b) and c), between steps c) and d) and between steps d) and e). The inclination and the direction of rotation or both of the defibering drum can thus be changed between method steps b) and c) and/or between steps c) and d) and/or between steps d) and e).

According to an embodiment the direction of rotation or the inclination of the defiberizing drum, or both, is changed at least between steps b) and c). According to an embodiment the direction of rotation and/or the inclination of the drum is changed at least between steps d) and e).

The method is carried out in a horizontal defiberizing drum, to the defiberizing portion of which a batch of fibrous material and water is fed. Advantageously the drum is inclined with respect to the horizontal e.g. by 0.1-5 degrees, preferably by 1-3 degrees, by lifting the feed end and the drum is also rotated in this step, which is method step a). The fibrous material typically comprises recovered paper, recovered board, e.g. liquid packaging board, or corresponding material. The consistency of the material slurry is 8-40%, typically 15-30%.

As the fibrous material batch has been fed to the defiberizing portion of the defiberizing drum, the inclination of the drum is advantageously decreased so that the drum is in horizontal position (inclination angle approximately zero degrees). The drum is rotated in adequate speed for obtaining the desired defiberizing effect, method step b). Thereby the fibrous material is lifted upwards as the drum rotates and drops down onto the bottom of the drum, simultaneously defiberizing. The defiberizing period is e.g. 15-60 minutes.

When the batch of fibrous material is defiberized to an adequate extent, the drum is stopped and advantageously inclined by lifting the feed end by approximately 0.1-5 degrees, preferably 1-3 degrees, e.g. to an inclination angle of approximately one degree. Rotating of the drum is started for transferring the defiberized material batch to the screening portion of the drum (step c) through an opening or openings in the partition wall, which partition wall divides the interior of the drum into defiberizing and screening portions. The drum can be rotated in a different direction than in the defiberizing stage, i.e. the direction of rotation of the drum is changed between steps b) and c). Transfer of the material to the screening portion can be assisted by feeding water via the feed end of the drum.

An advantage of the novel batch method is that the defiberizing time can be simply adjusted depending on the material being treated, even by batches, which typically is not possible in a continuous process. Because the direction of rotation of the drum and/or the inclination of the drum is changed after the defiberizing stage, in fact performing at least one of above mentioned measures facilitates adjusting the defiberizing time.

Other adjustment parameters of the defiberizing stage, which are known per se, are typically the temperature of the water and possible treatment chemicals.

When the material batch has been transferred to the screening portion, the inclination angle of the drum is advantageously changed so that the drum is in horizontal position (inclination angle approximately zero). The drum is rotated typically in the same direction as in the transfer stage of the defiberized material (step c). Dilution water is added in the material as known per se for washing the fibrous material and removing it from the reject remaining inside the drum. In the screening portion the housing of the drum is provided with screening holes or slots, through which acceptable fiber material passes into an accept vat below the drum, wherein the consistency is typically 2-4%. The washing/screening stage (step d)) typically takes approximately 10-20 minutes, e.g. 15 minutes, after which the drum is stopped. An advantage of a defiberizing drum is typically its high screening capacity.

For discharging reject material, the drum is advantageously inclined by lifting the feed end by 0.1-5 degrees, preferably by 1-3 degrees. e.g. by one degree. Then the drum is rotated in an opposite direction compared to the direction in the washing stage, i.e. the direction of rotation of the drum is changed between steps d) and e). After that, step e) is carried out, in which the reject is discharged via the discharge end of the drum. As the reject is thus removed from the screening portion, a new batch of fibrous material can simultaneously be introduced to the feed end of the drum for carrying out step a). Thus, method steps a) and e) are performed preferably simultaneously at the feed and discharge ends of the drum.

From the above description it becomes obvious that advantageously the inclination of the drum is changed after each method step a)-d).

An advantage of the novel batch method is that as the defiberizing time, also the retention time in the screening portion can be simply adjusted depending on the material being treated, even by batches. Because the direction of rotation of the drum and/or the inclination of the drum is changed after the screening stage, in fact performing at least one of the measures facilitates adjusting the screening time.

The invention also relates to a defiberizing drum arrangement comprising the features set forth in claim 10. Advantageously the lifting device is a hydraulic lifting device. It can also be pneumatic, mechanical, or electromechanical. The number of lifting devices can be one or more for the support base. The lifting device for the inclination can be coupled to the defiberizing drum also in another way than via a support stand.

The defiberizing drum is typically arranged to rotate around its substantially horizontal longitudinal axis. One end of the drum is provided with devices for feeding the fibrous material to be defiberized into the defiberizing portion of the drum and the other end is provided with devices for discharging the material from the screening portion. In this connection, substantially horizontal means that the horizontal cylinder forming the drum can be inclined with respect to the horizontal typically by 0-10 degrees.

A partition wall may be located between the defiberizing portion and the screening portion of the drum, which typically prevents the fibrous material from passing from the defiberizing portion to the screening portion during the defiberizing stage.

The method according to the present invention, i.e. steps a)-e) is most advantageously performed in a defiberizing drum acting as a main pulper, whereby it is the only pulper, and a secondary pulper can be additionally provided for reject treatment.

The invention also relates to the use of a rotary defiberizing drum as a batch-type defiberizing drum for defiberizing fibrous material, especially material containing recycled fibers, such as recovered paper or recovered board, as set forth in claim 12.

Some embodiments of the method and apparatus according to the invention are disclosed in the dependent claims.

Advantages of the present invention include:
- flexibility, since a batch-type process can be tailored according to need
- smaller amounts of material to be defiberized can be treated than in a continuous process
- the inclination of the drum is adjustable (during the process)
- freely adjustable retention time in the defiberizing and screening stages according to the fibrous material being defiberized and to temperature
- no intense shearing forces in the defiberizing stage
- efficient removal of coarse impurities, low fiber loss
- is not sensitive to the reject concentration or reject content of the fibrous material being treated
- does not break the impurities to small particles but keeps them as large pieces, whereby they are discharged from the reject end of the drum and are thus not passed into the accept and entrained therein further to the process
- low energy consumption compared to pulpers provided with rotors
- a simple process compared to pulpers provided with rotors

The present invention is described in more detail with reference to the appended figures, in which
Fig. 1 illustrates schematically as a side view an embodiment of a defiberizing drum according to the invention,
Fig. 2 illustrates schematically as a side view an embodiment of a defiberizing drum according to the invention,
Fig. 3 illustrates schematically as a side view an embodiment of a defiberizing drum according to the invention, and
Fig. 4 illustrates schematically a cross section of a defiberizing drum and a partition wall according to the invention.

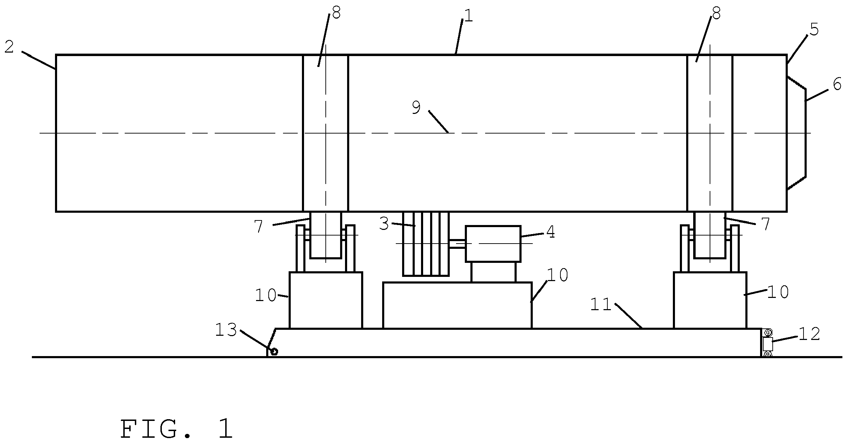

Fig. 1 illustrates a defiberizing drum arrangement according to the invention, comprising a drum 1 rotating around its horizontal longitudinal axis 9. The feed end part 5 of the drum comprises a feed conduit 6 for the material to be defiberized, whereto a hopper (not shown) is usually coupled. Another end part 2 comprises devices (not shown) for discharging treated (reject) material. In the passing direction of the material first follows a defiberizing portion and then a screening portion for the defiberized material. The portion of the housing at the feed end of the drum is non-perforated, and the portion of the housing at the discharge end is perforated for screening.

The drum 1 shown in Fig. 1 is driven by rubber wheel drive comprising a number of rubber wheels 3, which are arranged on a common shaft and are in contact with the lower surface of the drum 1 for causing the rotational motion of the drum. The shaft is connected to a power unit 4 comprising gears and an electric motor as known per se. The rubber wheels used are wheels filled with air or other gas, such as commonly available truck wheels. Instead of rubber wheel drive, girth gear drive, belt drive or chain drive can be used.

The support equipment for the defiberizing drum comprises support rollers 7, which are located in the longitudinal direction of the drum between the drive unit and the ends of the drum. Support rollers are arranged on both sides of the drum, whereby the total number of them is typically four. Thus, the support rollers are located in pairs symmetrically with respect to the longitudinal vertical plane of the drum, which plane extends along the longitudinal axis 9 of the drum. Around the circumference of the drum, bearer rings 8 are arranged at the support rollers, which rings are thus in contact with the support rollers 7.

The support equipment comprises a pair of support rollers in the longitudinal direction of the drum between each end of the drum and the drive unit. Most advantageously the support rollers are made of metal, such as steel or cast iron. They can also be made of other material, such as rubber and plastic mixtures, but that kind of rollers are more prone to wearing. The support rollers are located on both sides of the drum, and a support ring is arranged around the circumference of the drum, which support ring is in contact with the support rollers. The total number of support rollers is thus typically four. In this way, it is possible to arrange the drum support separately from the rubber wheel drive.

The defiberizing drum 1 is supported via the support equipment and stands 10 onto a support base 11. In accordance with the invention, the inclination of the defiberizing drum can be changed during a batch process. The support base 11 is illustrated as a side view, but the shape of it is typically rectangular. The edge of the support base at the side of the feed end of the defiberizing drum is provided with a lifting device 12, such as a hydraulic lifting device. The opposite edge of the support base is provided with an articulated joint 13 which allows inclining by means of the lifting device the support base and the defiberizing drum supported thereto. The lifting device can also be pneumatic, mechanical, or electromechanical. The number of lifting devices can be one or more for the support base.

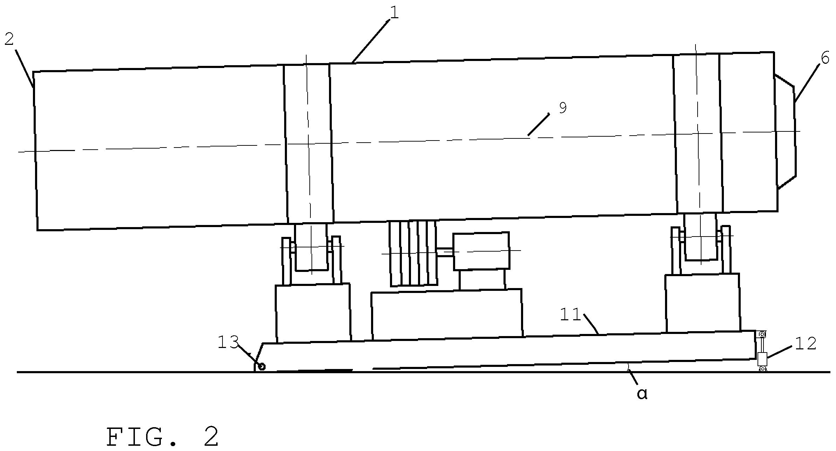

Fig. 2 illustrates a defiberizing drum 1 inclined by means of a lifting device 12 to an angle of inclination α with respect to the horizontal, whereby the feed end 6 is located higher than the discharge end.

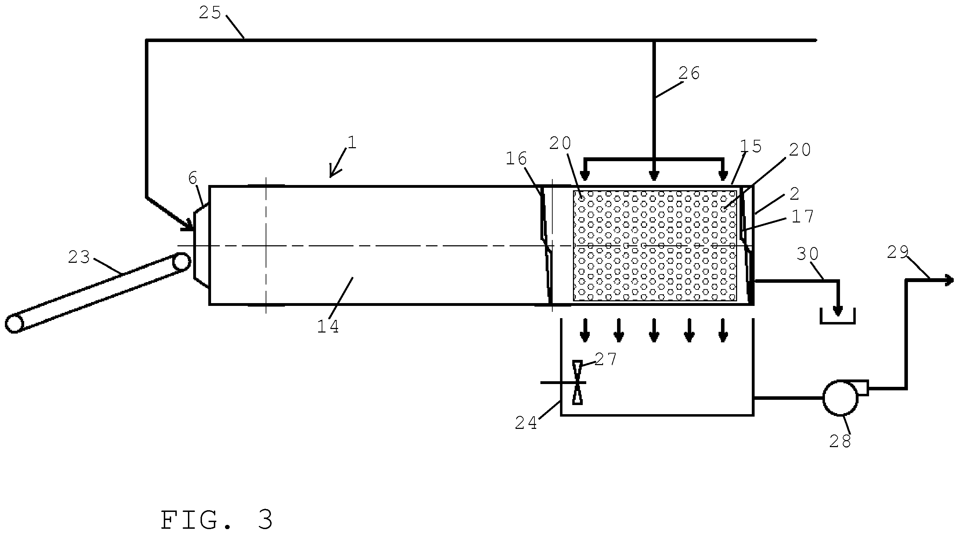

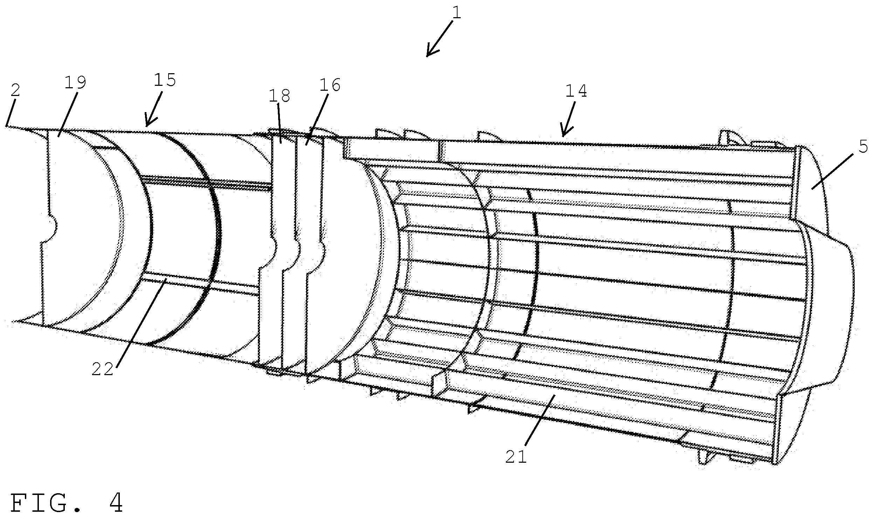

Fig. 3 illustrates the feed end 6 of the defiberizing drum 1, to which feed end a batch of recycled fibrous material to be treated is introduced by means of a conveyor 23. The drum comprises a defiberizing portion 14 for fibrous material, where the housing of the drum is non-perforated, and a screening portion 15, where the housing of the drum is perforated for recovering fibrous material. The defiberizing portion is typically provided with longitudinal internal lifting ribs or lifting strips 21 (Fig. 4) parallel to the axis, which during rotation of the drum continuously lift material being treated from the lowest portion of the drum housing to a higher located level, from where it is casted against the housing of the drum and exposed to deformation and shearing forces that break fiber bonds. The screening portion is provided with screening holes 20, through which the accepted fibrous material is discharged into a lower located accept basin 24. The screening portion can be provided with longitudinal protrusions 22 (Fig. 4) that lift the fibrous material flow being washed and screened.

When a batch of fibrous material and water is fed to the screening portion via line 25, the drum has been inclined e.g. by 0.1-5 degrees, preferably by 1-3 degrees by lifting the feed end, as shown in Fig. 2. The drum is also rotated in this stage. The fibrous material typically comprises recovered paper, recovered board, e.g. liquid packaging board, or corresponding material. The consistency of the material slurry is typically 15-30%. The feeding period lasts e.g. 5-10 minutes.

As the fibrous material batch has been fed to the defiberizing portion of the defiberizing drum, the inclination of the drum is advantageously decreased so that the drum is in horizontal position (inclination angle approximately zero degrees), as shown in Fig. 1. The drum is rotated in adequate speed for obtaining the desired defiberizing effect. Thereby the fibrous material is lifted upwards as the drum rotates and drops down onto the bottom of the drum, simultaneously defiberizing. The defiberizing period lasts e.g. 15-60 minutes.

When the batch of fibrous material is defiberized to an adequate extent, the drum is stopped and advantageously inclined by lifting the feed end by approximately 0.5-5 degrees, preferably 1-3 degrees, as shown in Fig. 2. Rotating of the drum is started for transferring the defiberized material batch to the screening portion 15 of the drum through an opening or openings in a partition wall 16, which partition wall divides the interior of the drum into defiberizing and screening portions. The drum is rotated in a different direction than in the defiberizing stage. Transfer of the material to the screening portion can be assisted by feeding water via line 25 at the feed end 6 of the drum. This stage can last e.g. approximately 10 minutes.

When the material batch has been transferred to the screening portion 15, the drum is stopped and the inclination angle of the drum is advantageously changed so that the drum is in horizontal position (inclination angle approximately zero), as shown in Fig. 1. The drum is rotated in the same direction as in the transfer stage of the defiberized material. Dilution water is added in the material as known per se via line 26 for washing the fibrous material and removing it from the reject remaining inside the drum. In the screening portion the housing of the drum is provided with screening holes 20, through which acceptable fiber material passes into an accept basin 24 below the drum, wherein the consistency is typically 2-4%. The washing/screening stage typically takes approximately 10-20 minutes, e.g. 15 minutes, after which the drum is stopped. A mixer 27 is advantageously arranged in the accept basin, by means of which settling of the fibrous material onto the bottom of the basin is prevented. The fibrous material is discharged from the basin by means of a pump and taken via line 29 to further treatment.

For discharging reject material, the drum is advantageously inclined by lifting the feed end by 0.1-5 degrees, preferably by 1-3 degrees, as shown in Fig. 2. Then the drum is rotated in an opposite direction compared to the washing stage. The reject is discharged via the discharge end 2 of the drum to line 30. As the reject is thus removed from the screening portion, a new batch of fibrous material can simultaneously be introduced to the feed end of the drum.

As mentioned in the above, a partition wall is arranged between the defiberizing portion and the screening portion, said wall having a flow opening, the shape of which can vary. As known, the defiberized fibrous material can be discharged via the opening in the partition wall by means of a hoisting bucket to the screening portion of the defiberizing drum. Instead of this known solution, a novel partition wall solution can be utilized, wherein the partition wall is formed by a screw 16 fixed inside the drum (Fig. 3 and 4). Fig. 4 illustrates a screw 16 having three threads 18, but the number of them can vary. As the drum rotates, the screw transfers the defiberized fibrous material into the screening portion 15. Figure 4 illustrates halves of the screw threads 18.

The discharge end of the screening portion of the defiberizing drum can also be provided with a screw wall 17 for discharging the reject. This screen can have e.g. one screw thread 19. As the drum rotates, the screw 17 discharges the reject from the screening portion 15 to further treatment into line 30.

The screws illustrated in Fig. 3 and 4 are fairly closed, having a minor opening in their middle part. The screw must not be very open, because that would allow passing of undefiberized fibrous material from the defiberizing portion into the screening portion before the defiberizing stage is terminated. The defiberized material batch is transferred into the screening portion via a space between the threads of a closed screw and the inner wall of the drum.

The screws of the partition wall 16 and the end wall 17 can have similar threads or different-handed threads, whereby the threads of the screws rotate in opposing directions as the drum rotates. An advantage of the latter solution is that passing of the material batch fed from the defiberizing portion into the screening portion out of the drum before adequate washing and screening is prevented more efficiently.

According to an embodiment, the discharge end 2 of the defiberizing drum 1 can be open devoid of any end wall. In that case the reject is discharged therefrom by means of inclination of the drum. If there is no end wall, the screening portion is to be longer for ensuring adequate screening time.

Since the process in the defiberizing drum 1 is a batch process, the partition wall separating the defiberizing portion and the screening portion can also be a stationary wall with a hatch that can be opened and closed. Also the end wall can be a wall with a hatch.

Although the above description relates to embodiments of the invention that in the light of present knowledge are considered the most preferable, it is obvious to a person skilled in the art that the invention can be modified in many different ways within the broadest possible scope defined by the appended claims alone.

## Claims

1. A method for defiberizing fibrous material, especially material containing recycled fibers, in a rotary defiberizing drum (1) having a material defiberizing portion (14) and a screening portion (15), wherein one end (5) of the rotary defiberizing drum (1) is provided with devices (6) for feeding the fibrous material into the defiberizing portion (14) of the rotary defiberizing drum (1) and the other end (2) of the rotary defiberizing drum (1) is provided with devices for discharging the material from the screening portion (15) thereof, the method comprising the following steps:
a) a batch of fibrous material and liquid is fed into the rotary defiberizing drum (1),
b) material is defiberized in the defiberizing portion (14) of the rotary defiberizing drum (1),
c) the defiberized material batch is transferred to the screening portion (15) of the rotary defiberizing drum (1),
d) the defiberized material batch is treated in the screening portion (15), wherein accepted fiber material is separated through a screening surface into accept, and
e) reject material is discharged from the rotary defiberizing drum (1),
wherein the direction of rotation or the inclination of the rotary defiberizing drum (1), or both, is changed at least between steps b) and e).

2. The method according to claim 1, wherein the direction of rotation and/or an inclination angle (α) of the rotary defiberizing drum (1) is changed at least at one of the following points: between steps b) and c), between steps c) and d) and between steps d) and e).

3. The method according to claim 1 or 2, wherein the direction of rotation and/or an inclination angle (α) of the rotary defiberizing drum (1) is changed at least between steps b) and c).

4. The method according to claim 1, 2 or 3, wherein the direction of rotation and/or an inclination angle (α) of the rotary defiberizing drum (1) is changed at least between steps d) and e).

5. The method according to claim 1, 2, 3 or 4, wherein the inclination of the rotary defiberizing drum (1) is changed after each step a)-d).

6. The method according to any one of the preceding claims, wherein the inclination angle (α) of the rotary defiberizing drum (1) in steps a), c) and e) is 0.1-5 degrees, preferably 1-3 degrees, with respect to the horizontal.

7. The method according to any one of the preceding claims, wherein the inclination angle (α) of the rotary defiberizing drum (1) in steps b), and d) is 0-1 degrees, preferably 0-0.5 degrees, with respect to the horizontal.

8. The method according to any one of the preceding claims, wherein the consistency of the material in the defiberizing portion in step b) is 15-30%.

9. The method according to any one of the preceding claims, wherein in the defiberizing stage passing of the fibrous material into the screening stage is prevented by means of a partition wall construction.

10. A defiberizing drum arrangement comprising a rotary defiberizing drum (1), the rotary defiberizing drum (1) having a defiberizing portion (14) for defiberizing fibrous material fed into the rotary defiberizing drum (1) and a screening portion (15) for recovering fibers,
wherein the drum arrangement comprises a lifting device (12) for changing the inclination of the rotary defiberizing drum (1) during a batch process,
**characterized in that**
one end (5) of the rotary defiberizing drum (1) is provided with devices (6) for feeding a fibrous material to be defiberized into the defiberizing portion (14) of the rotary defiberizing drum (1) and the other end (2) of the rotary defiberizing drum (1) is provided with devices for discharging the material from the screening portion (15) thereof, and the rotary defiberizing drum (1) is further provided with a support equipment comprising support rollers (7), onto which the rotary defiberizing drum (1) is supported and which are arranged on a support base (11), and the lifting device (12) is coupled to the support base for lifting and lowering it in order to change the inclination of the rotary defiberizing drum (1).

11. The arrangement according to claim 10, wherein a partition wall (16) is arranged between the defiberizing portion (14) and the screening portion (15) of the rotary defiberizing drum (1), which prevents fibrous material from passing from the defiberizing portion into the screening portion during the defiberizing stage of a batch process.

12. Use of a rotary defiberizing drum (1) as a batch defiberizing drum for defiberizing fibrous material, whereby the rotary defiberizing drum (1) comprises a defiberizing portion (14) and a screening portion (15), and lifting devices (12) are arranged in connection with the rotary defiberizing drum (1) for changing its inclination during a batch process, wherein one end (5) of the rotary defiberizing drum (1) is provided with devices (6) for feeding the fibrous material into the defiberizing portion (14) of the rotary defiberizing drum (1) and the other end (2) of the rotary defiberizing drum (1) is provided with devices for discharging the material from the screening portion (15) thereof.

## Patentansprüche

1. Verfahren zur Entfaserung von Fasermaterial, insbesondere von Material, das recycelte Fasern enthält, in einer rotierenden Entfaserungstrommel (1), die einen Materialentfaserungsabschnitt (14) und einen Siebabschnitt (15) aufweist, wobei ein Ende (5) der rotierenden Entfaserungstrommel (1) mit Vorrichtungen (6) zum Zuführen des Fasermaterials in den Entfaserungsabschnitt (14) der rotierenden Entfaserungstrommel (1) bereitgestellt ist und das andere Ende (2) der rotierenden Entfaserungstrommel (1) mit Vorrichtungen zum Austragen des Materials aus dem Siebabschnitt (15) derselben bereitgestellt ist, wobei das Verfahren die folgenden Schritte umfasst:
a) eine Charge aus Fasermaterial und Flüssigkeit wird in die rotierende Entfaserungstrommel (1) eingeführt,
b) Material wird im Entfaserungsabschnitt (14) der rotierenden Entfaserungstrommel (1) entfasert,
c) die entfaserte Materialcharge wird zum Siebabschnitt (15) der rotierenden Entfaserungstrommel (1) transferiert,
d) die entfaserte Materialcharge wird in dem Siebabschnitt (15) behandelt, wobei angenommenes Fasermaterial durch eine Siebfläche in Gutstoff getrennt wird, und
e) der Spukstoff wird aus der rotierenden Entfaserungstrommel (1) ausgetragen,
wobei die Rotationsrichtung oder die Neigung der rotierenden Entfaserungstrommel (1) oder beide zumindest zwischen den Schritten b) und e) geändert wird.

2. Verfahren nach Anspruch 1, wobei die Rotationsrichtung und/oder ein Neigungswinkel (α) der rotierenden Entfaserungstrommel (1) zumindest an einem der folgenden Punkte geändert wird: zwischen den Schritten b) und c), zwischen den Schritten c) und d) und zwischen den Schritten d) und e).

3. Verfahren nach Anspruch 1 oder 2, wobei die Rotationsrichtung und/oder ein Neigungswinkel (α) der rotierenden Entfaserungstrommel (1) zumindest zwischen den Schritten b) und c) geändert wird.

4. Verfahren nach Anspruch 1, 2 oder 3, wobei die Rotationsrichtung und/oder ein Neigungswinkel (α) der rotierenden Entfaserungstrommel (1) zumindest zwischen den Schritten d) und e) geändert wird.

5. Verfahren nach Anspruch 1, 2, 3 oder 4, wobei die Neigung der rotierenden Entfaserungstrommel (1) nach jedem Schritt a)-d) geändert wird.

6. Verfahren nach einem der vorstehenden Ansprüche, wobei der Neigungswinkel (α) der rotierenden Entfaserungstrommel (1) in den Schritten a), c) und e) 0,1-5 Grad, vorzugsweise 1-3 Grad, in Bezug auf die Horizontale beträgt.

7. Verfahren nach einem der vorstehenden Ansprüche, wobei der Neigungswinkel (α) der rotierenden Entfaserungstrommel (1) in den Schritten b) und d) 0-1 Grad, vorzugsweise 0-0,5 Grad, in Bezug auf die Horizontale beträgt.

8. Verfahren nach einem der vorstehenden Ansprüche, wobei die Konsistenz des Materials im Entfaserungsabschnitt in Schritt b) 15-30 % beträgt.

9. Verfahren nach einem der vorstehenden Ansprüche, wobei in der Entfaserungsstufe das Eindringen des Fasermaterials in die Siebstufe durch eine Trennwandkonstruktion verhindert wird.

10. Entfaserungstrommelanordnung, umfassend eine rotierende Entfaserungstrommel (1), wobei die rotierende Entfaserungstrommel (1) einen Entfaserungsabschnitt (14) zum Entfasern von Fasermaterial, das in die rotierende Entfaserungstrommel (1) eingeführt wird, und einen Siebabschnitt (15) zum Rückgewinnen von Fasern aufweist,
wobei die Trommelanordnung eine Hebevorrichtung (12) zum Ändern der Neigung der rotierenden Entfaserungstrommel (1) während eines Chargenprozesses umfasst,
**dadurch gekennzeichnet, dass**
ein Ende (5) der rotierenden Entfaserungstrommel (1) mit Vorrichtungen (6) zum Zuführen eines zu entfasernden Fasermaterials in den Entfaserungsabschnitt (14) der rotierenden Entfaserungstrommel (1) bereitgestellt ist und das andere Ende (2) der rotierenden Entfaserungstrommel (1) mit Vorrichtungen zum Austragen des Materials aus dem Siebabschnitt (15) derselben bereitgestellt ist, und
die rotierende Entfaserungstrommel (1) weiter mit einer Stützeinrichtung bereitgestellt ist, die Stützrollen (7) umfasst, auf denen die rotierende Entfaserungstrommel (1) abgestützt ist und die auf einer Stützbasis (11) angeordnet sind, und die Hebevorrichtung (12) mit der Stützbasis gekoppelt ist, um sie anzuheben und abzusenken, um die Neigung der rotierenden Entfaserungstrommel (1) zu ändern.

11. Anordnung nach Anspruch 10, wobei eine Trennwand (16) zwischen dem Entfaserungsabschnitt (14) und dem Siebabschnitt (15) der rotierenden Entfaserungstrommel (1) angeordnet ist, die verhindert, dass Fasermaterial während der Entfaserungsphase eines Chargenprozesses aus dem Entfaserungsabschnitt in den Siebabschnitt eindringt.

12. Verwendung einer rotierenden Entfaserungstrommel (1) als Chargen-Entfaserungstrommel zur Entfaserung von Fasermaterial, wobei die rotierende Entfaserungstrommel (1) einen Entfaserungsabschnitt (14) und einen Siebabschnitt (15) umfasst, und Hebevorrichtungen (12) in Verbindung mit der rotierenden Entfaserungstrommel (1) zum Ändern ihrer Neigung während eines Chargenprozesses angeordnet sind, wobei ein Ende (5) der rotierenden Entfaserungstrommel (1) mit Vorrichtungen (6) zum Zuführen des Fasermaterials in den Entfaserungsabschnitt (14) der rotierenden Entfaserungstrommel (1) bereitgestellt ist und das andere Ende (2) der rotierenden Entfaserungstrommel (1) mit Vorrichtungen zum Austragen des Materials aus dem Siebabschnitt (15) derselben bereitgestellt ist.

## Revendications

1. Procédé de défibrage d'un matériau fibreux, en particulier d'un matériau contenant des fibres recyclées, dans un tambour de défibrage rotatif (1) ayant une partie de défibrage de matériau (14) et une partie de criblage (15), dans lequel une extrémité (5) du tambour de défibrage rotatif (1) est pourvue de dispositifs (6) pour acheminer le matériau fibreux dans la partie de défibrage (14) du tambour de défibrage rotatif (1) et l'autre extrémité (2) du tambour de défibrage rotatif (1) est pourvue de dispositifs pour décharger le matériau depuis sa partie de criblage (15), le procédé comprenant les étapes suivantes :
a) un lot de matériau fibreux et de liquide est acheminé dans le tambour de défibrage rotatif (1),
b) le matériau est défibré dans la partie de défibrage (14) du tambour de défibrage rotatif (1),
c) le lot de matériau défibré est transféré à la partie de criblage (15) du tambour de défibrage rotatif (1),
d) le lot de matériau défibré est traité dans la partie de criblage (15), dans lequel le matériau fibreux accepté est séparé à travers une surface de criblage en matériau accepté et
e) le matériau rejeté est déchargé du tambour de défibrage rotatif (1),
dans lequel le sens de rotation ou l'inclinaison du tambour de défibrage rotatif (1), ou les deux, est modifié(e) au moins entre les étapes b) et e).

2. Procédé selon la revendication 1, dans lequel le sens de rotation et/ou un angle d'inclinaison (α) du tambour de défibrage rotatif (1) est ou sont modifié(s) au moins à l'un des points suivants : entre les étapes b) et c), entre les étapes c) et d) et entre les étapes d) et e).

3. Procédé selon la revendication 1 ou 2, dans lequel le sens de rotation et/ou un angle d'inclinaison (α) du tambour de défibrage rotatif (1) est ou sont modifié(s) au moins entre les étapes b) et c).

4. Procédé selon la revendication 1, 2 ou 3, dans lequel le sens de rotation et/ou un angle d'inclinaison (α) du tambour de défibrage rotatif (1) est ou sont modifié(s) au moins entre les étapes d) et e).

5. Procédé selon la revendication 1, 2, 3 ou 4, dans lequel l'inclinaison du tambour de défibrage rotatif (1) est modifiée après chaque étape a) à d).

6. Procédé selon l'une quelconque des revendications précédentes, dans lequel l'angle d'inclinaison (α) du tambour de défibrage rotatif (1) aux étapes a), c) et e) est de 0,1 à 5 degrés, de préférence de 1 à 3 degrés, par rapport à l'horizontale.

7. Procédé selon l'une quelconque des revendications précédentes, dans lequel l'angle d'inclinaison (α) du tambour de défibrage rotatif (1) aux étapes b) et d) est de 0 à 1 degré, de préférence de 0 à 0,5 degré, par rapport à l'horizontale.

8. Procédé selon l'une quelconque des revendications précédentes, dans lequel la consistance du matériau dans la partie de défibrage à l'étape b) est de 15 à 30 %.

9. Procédé selon l'une quelconque des revendications précédentes, dans lequel, au stade de défibrage, le passage du matériau fibreux au stade de criblage est empêché au moyen d'une structure de paroi séparatrice.

10. Agencement de tambour de défibrage comprenant un tambour de défibrage rotatif (1), le tambour de défibrage rotatif (1) ayant une partie de défibrage (14) pour défibrer le matériau fibreux acheminé dans le tambour de défibrage rotatif (1) et une partie de criblage (15) pour récupérer des fibres,
dans lequel l'agencement de tambour comprend un dispositif de levage (12) pour changer l'inclinaison du tambour de défibrage rotatif (1) au cours d'un processus discontinu,
**caractérisé en ce que**
une extrémité (5) du tambour de défibrage rotatif (1) est pourvue de dispositifs (6) pour acheminer un matériau fibreux à défibrer dans la partie de défibrage (14) du tambour de défibrage rotatif (1) et l'autre extrémité (2) du tambour de défibrage rotatif (1) est pourvue de dispositifs pour décharger le matériau de sa partie de criblage (15), et
le tambour de défibrage rotatif (1) est en outre pourvu d'un équipement de support comprenant des rouleaux de support (7), sur lesquels le tambour de défibrage rotatif (1) est supporté et qui sont agencés sur une base de support (11), et le dispositif de levage (12) est couplé à la base de support pour la soulever et l'abaisser afin de changer l'inclinaison du tambour de défibrage rotatif (1).

11. Agencement selon la revendication 10, dans lequel une paroi séparatrice (16) est agencée entre la partie de défibrage (14) et la partie de criblage (15) du tambour de défibrage rotatif (1), qui empêche le matériau fibreux de passer de la partie de défibrage dans la partie de criblage au cours du stade de défibrage d'un processus discontinu.

12. Utilisation d'un tambour de défibrage rotatif (1) comme tambour de défibrage discontinu pour défibrer un matériau fibreux, dans lequel le tambour de défibrage rotatif (1) comprend une partie de défibrage (14) et une partie de criblage (15), et des dispositifs de levage (12) sont agencés en liaison avec le tambour de défibrage rotatif (1) pour changer son inclinaison au cours d'un processus discontinu, dans lequel une extrémité (5) du tambour de défibrage rotatif (1) est pourvue de dispositifs (6) pour acheminer le matériau fibreux dans la partie de défibrage (14) du tambour de défibrage rotatif (1) et l'autre extrémité (2) du tambour de défibrage rotatif (1) est pourvue de dispositifs pour décharger le matériau de sa partie de criblage (15).
